# EUROPEAN PATENT APPLICATION

(11) **EP 2 194 533 A1**
(43) Date of publication of application: **09.06.2010**
(21) Application number: 09177901.7
(22) Date of filing: 03.12.2009
(51) Int. Cl.: G11B 27/10, G11B 27/34, G11B 20/10, A63F 13/10, G06F 9/445

(54) **Optical disc apparatus**

(30) Priority: 05.12.2008 JP 2008311452
(71) Applicant: Funai Electric Co., Ltd., Osaka 574-0013 (JP)
(72) Inventor: Yoshida, Shinji, Daito-shi Osaka 574-0013 (JP)
(74) Representative: Grünecker, Kinkeldey, Stockmair & Schwanhäusser Anwaltssozietät

(57) **Abstract**

An optical disc apparatus that reproduces images from an optical disc by reading image data from the optical disc and displaying images based on the image data read from the optical disc. When the optical disc apparatus reproduces images from an optical disc, the apparatus performs a preparation operation for reproduction of images from the optical disc. During the preparation operation, the optical disc apparatus sequentially displays different types of initial images as time passes. For example, the first initial image, which is to be displayed first of the initial images, is an image indicating the type of the optical disc as well as showing the name of the manufacturer of the optical disc apparatus. The second and third initial images are a scenic image and an image showing a message to a user, respectively.

## Description

### BACKGROUND OF THE INVENTION

### 1. Field of the Invention

The present invention relates to an optical disc apparatus that reproduces images from optical discs such as CDs, DVDs, and Blu-ray discs (BDs).

### 2. Description of the Related Art

Optical disc apparatuses reproduce images from an optical disc by reading image data from the optical disc and displaying images based on the image data read from the optical disc. When such an optical disc apparatus reproduces images from an optical disc, the apparatus first performs a preparation operation for reproduction of images from the optical disc (operation of reading management data, control data, and so on from the optical disc and processing the data for reproduction of images from the optical disc). After completing the preparation operation for reproduction, the optical disc apparatus reads image data from the optical disc and displays images based on the image data read from the optical disc. Thus, during the preparation operation for reproduction of images from an optical disc, the optical disc apparatus does not display images based on image data read from the optical disc or does not reproduce images from the optical disc. For this period of time, a user has to wait.

Some optical disc apparatuses display a given initial image, which is prepared in advance, until images are reproduced from an optical disc, i.e., while the apparatuses are performing the preparation operation for reproduction of images from the optical disc (see, for example, Japanese Laid-open Patent Publication Nos. 2001-326904 and 2006-253863 and Japanese Utility Model No. 3090056). The optical disc apparatuses described in the three documents keep displaying the same image (still image or moving image) as the initial image until images are reproduced from an optical disc.

However, the above-described conventional optical disc apparatuses have the following problems. As described above, the conventional apparatuses keep displaying the same initial image until images are reproduced from an optical disc. Therefore, a user cannot enjoy during the waiting time before reproduction of images from the optical disc. Especially, when the preparation operation for reproduction requires a long time, for example, when the optical disc is a BD (which may require 30 seconds or more before reproduction of images from the optical disc), the waiting time before reproduction of images from an optical disc will be long. In such a case, the user may have to spend the long waiting time without being able to enjoy. Further, when the same initial image is continuously displayed for a long time, a user may mistakenly think that some operation is required and may operate the apparatus incorrectly.

### SUMMARY OF THE INVENTION

An object of the present invention is to provide an optical disc apparatus that enables a user to enjoy during the waiting time before images are reproduced from an optical disc.

According to an aspect of the present invention, this object is achieved by an optical disc apparatus that reproduces images from an optical disc by reading image data from the optical disc and displaying images based on the image data read from the optical disc, comprising: initial image display means for, when the apparatus reproduces images from an optical disc, displaying given initial images while the apparatus is performing a preparation operation for reproduction of images from the optical disc. The initial image display means sequentially displays different types of images, as the initial images, as time passes.

The optical disc apparatus enables a user to be entertained by the initial images (different types of images displayed sequentially) during the waiting time before reproduction of images from the optical disc. Further, the sequential display of different types of images can inform a user that the preparation operation for reproduction is proceeding well. This can prevent the user from mistakenly thinking that some operation is required, thus preventing the user from operating the apparatus incorrectly.

Preferably, the initial image display means displays different images, as the initial images, depending on type of the optical disc. Thereby, a user can further enjoy during the waiting time before reproduction of images from the optical disc.

Preferably, as the initial images, the initial image display means displays images that a user has selected as images to be displayed as the initial images from among plural images prepared in advance. Thereby, a user can cause a desired initial image to be displayed and thus can further enjoy during the waiting time before reproduction of images from the optical disc.

In one embodiment, the initial image display means displays an image indicating the type of the optical disc as a first initial image that is displayed first of the initial images. Thereby, a user can look at the initial image (image indicating the type of the optical disc) to know the type of the optical disc to be played. Then, based on the type of the optical disc indicated by the initial image, the user can predict how long the user has to wait before images are reproduced. This can reduce the stress of waiting for images to be reproduced from the optical disc.

In one embodiment, the initial image display means displays an image showing name of manufacturer of the apparatus as a first initial image that is displayed first of the initial images. Thereby, a user can know the name of the manufacturer of the optical disc apparatus by viewing the initial image (image showing the name of the manufacturer of the optical disc apparatus). This can provide an advertisement to a user.

While the novel features of the present invention are set forth in the appended claims, the present invention will be better understood from the following detailed description taken in conjunction with the drawings.

### BRIEF DESCRIPTION OF THE DRAWINGS

The present invention will be described hereinafter with reference to the annexed drawings. It is to be noted that all the drawings are shown for the purpose of illustrating the technical concept of the present invention or embodiments thereof, wherein:

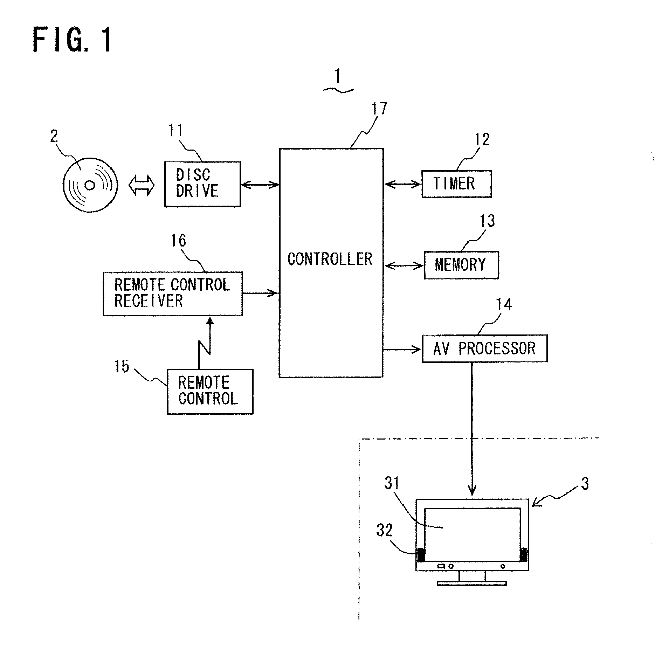

F1G 1 is an electrical block diagram showing an optical disc apparatus according to one embodiment of the present invention; and
FIC. 2 is a flowchart showing the disc data reproduction operation of the optical disc apparatus.

### DESCRIPTION OF THE PREFERRED EMBODIMENTS

Referring now to the accompanying drawings, an optical disc apparatus embodying the present invention is described. It is to be noted that the following description of preferred embodiment of the present invention has been presented for purposes of illustration and description, and is not intended to be exhaustive or to limit the present invention to the precise form disclosed.

FIG. 1 shows the configuration of the optical disc apparatus according to this embodiment. The optical disc apparatus 1 is an apparatus that is used to reproduce images and audio from an optical disc 2 such as a CD, a DVD, or a Blu-ray disc (BD). The optical disc apparatus 1 reproduces images from the optical disc 2 by reading image data from the optical disc 2 and displaying images based on the image data read from the optical disc 2 on a display 31 of an external device 3. Further, the optical disc apparatus 1 reproduces audio from the optical disc 2 by reading audio data from the optical disc 2 and outputting audio based on the audio data read from the optical disc 2 to a loudspeaker 32 of the external device 3. When the optical disc apparatus 1 reproduces images from the optical disc 2, it displays given initial images while performing a preparation operation for reproduction of images from the optical disc 2.

The optical disc apparatus 1 comprises a disc drive 11, a timer 12, a memory 13, an audio/video (AV) processor 14, a remote control 15, a remote control receiver 16, a controller 17 including a CPU that controls the operation of the optical disc apparatus 1, a ROM, and a RAM, and so on. The ROM in the controller 17 stores programs for controlling the operation of the optical disc apparatus 1 as well as various kinds of data.

The optical disc 2 is placed in and removed from the disc drive 11. Under the control of the controller 17, the disc drive 11 reads recorded data (various kinds of data such as management data, control data, image data, and audio data recorded on the optical disc 2) from the optical disc 2 placed therein and outputs the recorded data read from the optical disc 2. This disc drive 11 can read recorded data from a CD, a DVD, or a BD as the optical disc 2. Further, the disc drive 11 functions to detect the optical disc 2 placed therein and to identify the type of the placed optical disc 2. When the optical disc 2 is placed in the disc drive 11, the disc drive 11 outputs a disc detection signal indicating the placement of the optical disc 2 and a disc identification signal indicating the type of the placed optical disc 2.

The timer 12 counts time and outputs the current time. Image data of images to be displayed as initial images are stored in the memory 13 in advance. Further, under the control of the controller 17, the memory 13 stores the current time outputted from the timer 12, various settings for the optical disc apparatus 1, and so on.

Under the control of the controller 17, the AV processor 14 processes image data supplied from the controller 17, produces image signals to display images based on the image data on the display 31, and sends the image signals to the display 31. Further, under the control of the controller 17, the AV processor 14 processes audio data supplied from the controller 17, produces audio signals to output audio based on the audio data through the loudspeaker 32, and sends the audio signals to the loudspeaker 32. When image signals are sent from the AV processor 14 to the display 31, images based on the image signals (i.e., images based on image data supplied from the controller 17) are thereby displayed on the display 31. When audio signals are sent from the AV processor 14 to the loudspeaker 32, audio based on the audio signals (i.e., audio based on audio data supplied from the controller 17) is thereby output through the loudspeaker 32.

The remote control 15 has various operation keys operated by a user to enter commands for various operations of the optical disc apparatus 1. When the operation keys are operated, the remote control 15 transmits wireless signals indicating the user operations. The remote control receiver 16 receives the wireless signals transmitted from the remote control 15 and outputs, as electrical signals, the received remote control signals indicating the user operations on the remote control 15.

The controller 17 determines how the remote control 15 has been operated based on the received remote control signals sent from the remote control receiver 16. Further, based on the disc detection signals sent from the disc drive 11, the controller 17 determines that the optical disc 2 is placed in the disc drive 11. The controller 17 also determines the type of the optical disc 2 placed in the disc drive 11 based on the disc identification signals sent from the disc drive 11. The controller 17 controls various operations of the optical disc apparatus 1, including the disc data reproduction operation for reproducing images and audio from the optical disc 2.

The disc data reproduction operation is started when the optical disc 2 is placed in the disc drive 11 or when the remote control 15 is operated for disc data reproduction. In the disc data reproduction operation, the controller 17 first determines the type of the optical disc 2. Subsequently, the controller 17 performs the preparation operation for reproduction of images and audio from the optical disc 2. After completing the preparation operation for reproduction, the controller 17 reproduces images and audio from the optical disc 2.

The determination of the type of the optical disc 2 is fulfilled based on the disc identification signals sent from the disc drive 11. In other words, the controller 17 determines the type of the optical disc 2 based on the disc identification signals sent from the disc drive 11.

The preparation operation for reproduction is the operation of reading data including management data and control data from the optical disc 2 and processing the data including the management data and the control data for reproduction of images and audio from the optical disc 2. In other words, in the preparation operation for reproduction, the controller 17 causes the disc drive 11 to read the data including the management data and the control data from the optical disc 2 and processes the data including the management data and the control data read from the optical disc 2 (which are sent from the disc drive 11).

The reproduction of images and audio from the optical disc 2 is implemented by displaying on the display 31 images based on image data recorded on the optical disc 2 while outputting audio based on audio data recorded on the optical disc 2 through the loudspeaker 32. In other words, for reproduction of images and audio from the optical disc 2, the controller 17 causes the disc drive 11 to read image data and audio data from the optical disc 2 and supplies the image data and the audio data read from the optical disc 2 (which are sent from the disc drive 11) to the AV processor 14. Accordingly, the AV processor 14 produces image signals to display on the display 31 images based on the image data read from the optical disc 2 and sends the image signals to the display 31, so that the images based on the image data read from the optical disc 2 are displayed on the display 31. Further, the AV processor 14 produces audio signals to output through the loudspeaker 32 audio based on the audio data read from the optical disc 2 and sends the audio signals to the loudspeaker 32, so that the audio based on the audio data read from the optical disc 2 is outputted through the loudspeaker 32.

In the process of the disc data reproduction operation (i.e., when reproducing images and audio from the optical disc 2), the controller 17 displays the initial images while performing the preparation operation for reproduction. The display of the initial images is implemented by displaying on the display 31 the images based on the image data stored in the memory 13 (image data of the images to be displayed as the initial images). In other words, for displaying the initial images, the controller 17 reads the image data from the memory 13 and supplies the image data to the AV processor 14. Thus, the AV processor 14 produces image signals to display on the display 31 the images based on the image data read from the memory 13 and sends the image signals to the display 31, so that the initial images are displayed on the display 31. Initial image display means in claims includes the controller 17.

How the optical disc apparatus 1 displays the above described initial images is now described. As described above, in the process of the disc data reproduction operation (i.e., when reproducing images and audio from the optical disc 2), the controller 17 displays the initial images on the display 31 during the preparation operation for reproduction. As the initial images, the controller 17 sequentially displays different types of images as time passes. The different types of images mean separate images (still images or moving images) each complete by itself, not continuous (continuously-changing) still images or a series of moving images.

In this embodiment, a first initial image, a second initial image, and a third initial image are sequentially displayed as the initial images. More particularly, after the start of the preparation operation for reproduction, the controller 17 first displays the first initial image. Then, when a predetermined time period has passed before the completion of the preparation operation for reproduction, the controller 17 displays the second initial image, which is different in type from the first initial image, in place of the first initial image. When a predetermined time period has further passed before the completion of the preparation operation for reproduction, the controller 17 displays the third initial image, which is different in type from the second initial image, in place of the second initial image.

Further, as the initial images, the controller 17 displays different images depending on the type of the optical disc 2. More particularly, when the optical disc 2 is a CD, the controller 17 first displays a first initial image for CDs after the start of the preparation operation for reproduction. Then, when a predetermined time period has passed before the completion of the preparation operation for reproduction, the controller 17 displays a second initial image for CDs in place of the first initial image for CDs. When a predetermined time period has further passed before the completion of the preparation operation for reproduction, the controller 17 displays a third initial image for CDs in place of the second initial image for CDs. Likewise, when the optical disc 2 is a DVD, the controller 17 sequentially displays a first initial image for DVDs, a second initial image for DVDs, and a third initial image for DVDs. When the optical disc 2 is a BD, the controller 17 sequentially displays a first initial image for BDs, a second initial image for BDs, and a third initial image for BDs.

In this embodiment, the first initial image, which is to be displayed first of the initial images, is an image indicating the type of the optical disc 2 as well as showing the name of the manufacturer of the optical disc apparatus 1. The second and third initial images are a scenic image and an image showing a message to a user, respectively.

For example, an image in which the manufacturer name is shown on a white background is displayed as the first initial image for CDs. An image in which the manufacturer name is shown on a red background is displayed as the first initial image for DVDs. An image in which the manufacturer name is shown on a blue background is displayed as the first initial image for BDs. Thus, in the first initial image for CDs, the white background indicates that the optical disc 2 is a CD while the name of the manufacturer of the optical disc apparatus 1 is shown. In the first initial image for DVDs, the read background indicates that the optical disc 2 is a DVD while the name of the manufacturer of the optical disc apparatus 1 is shown. In the first initial image for BDs, the blue background indicates that the optical disc 2 is a BD while the name of the manufacturer of the optical disc apparatus 1 is shown.

Examples of the second initial images are as follows. For CDs, a mountain image is displayed as the second initial image. For DVDs, a grassland image is displayed as the second initial image. For BDs, a street scene image is displayed as the second initial image. These second initial images for CDs, DVDs, and BDs to be displayed are images that a user has selected as images to be displayed as the initial images from among a number of images (spring scene images, summer scene images, autumn scene images, and winter scene images), which are prepared in advance. The selection of the second initial images by a user is performed by operating the remote control 14. If no image has been selected by a user, a default image is displayed.

The third initial images to be displayed for CDs, DVDs, and BDs are the same image showing a message such as "Preparing, please wait", for example.

Accordingly, when the optical disc 2 is a CD, the image in which the manufacturer name is shown on a white background (the first initial image), the image of a mountain scene (in any one of spring, summer, autumn, and winter) (the second initial image), and the image showing a message such as "Preparing, please wait" (the third initial image) are displayed in that order as the initial images. When the optical disc 2 is a DVD, the image in which the manufacturer name is shown on a red background (the first initial image), the image of a grassland scene (in any one of spring, summer, autumn, and winter) (the second initial image), and the image showing a message such as "Preparing, please wait" (the third initial image) are displayed in that order as the initial images. When the optical disc 2 is a BD, the image in which the manufacturer name is shown on a blue background (the first initial image), the image of a street scene (in any one of spring, summer, autumn, and winter) (the second initial image), and the image showing a message such as "Preparing, please wait" (the third initial image) are displayed in that order as the initial images.

In the above described manner, the controller 17 displays the initial images. More particularly, the image data of the first, second, and third initial images for CDs, DVDs, and BDs, are stored in the memory 13. Based on the image data of the first, second, and third initial images for CDs, DVDs, and BDs stored in the memory 13, the controller 17 displays the initial images.

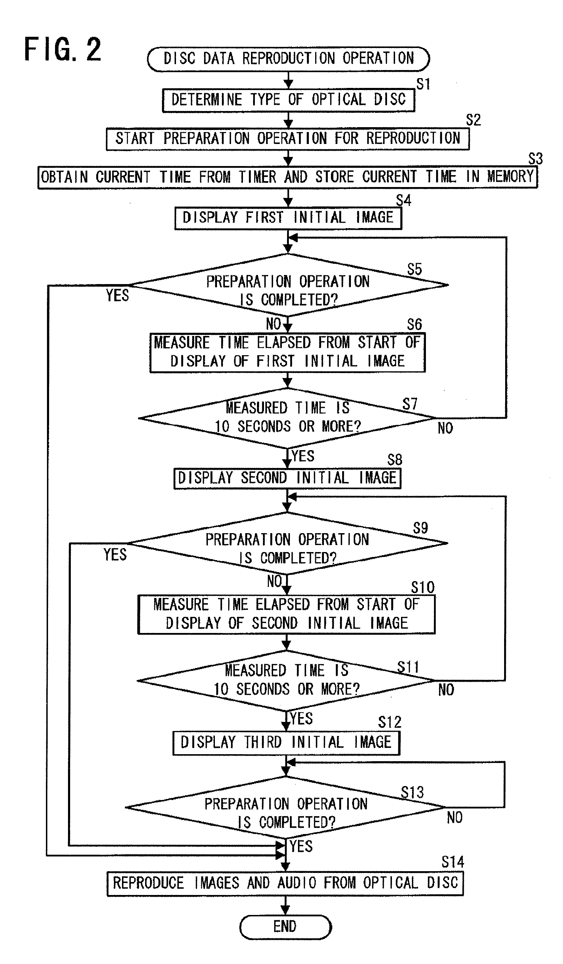

FIG. 2 shows a flowchart of the disc data reproduction operation of the optical disc apparatus 1. As described above, the disc data reproduction operation is started when the optical disc 2 is placed in the disc drive 11 or when the remote control 15 is operated for disc data reproduction..

In the disc data reproduction operation, the controller 17 first determines the type of the optical disc 2 placed in the disc drive 11 based on the disc identification signal sent from the disc drive 11 (S1). Then, the controller 17 starts the preparation operation for reproduction (S2).

Subsequently, the controller 17 obtains the current time from the timer 12 to store the current time in the memory 13 (S3), and displays the first initial image on the display 31 (S4). As the first initial image, the controller 17 displays different images depending on the type of the optical disc 2 as described above. More particularly, the controller 17 displays the first initial image for CDs when the optical disc 2 is a CD, displays the first initial image for DVDs when the optical disc 2 is a DVD, and displays the first initial image for BDs when the optical disc 2 is a BD.

Subsequently, if the preparation operation for reproduction has been completed while the first initial image is displayed (YES at S5), the controller 17 reproduces images and audio from the optical disc 2 (S14).

On the other hand, if the preparation operation for reproduction is not completed while the first initial image is displayed (NO at S5), the controller 17 obtains the current time from the timer 12, and measures the time elapsed from the start of the display of the first initial image based on the current time and the time stored in the memory 13 at the above step S3 (S6). If the measured time (time elapsed from the start of the display of the first initial image) is less than ten seconds (NO at S7), the controller 17 repeats the process from the above step S5. If the measured time is ten seconds or more (YES at S7), the controller 17 displays the second initial image on the display 31 (S8). As the second initial image, the controller 17 displays different images depending on the type of the optical disc 2 as described above. More particularly, the controller 17 displays the second initial image for CDs when the optical disc 2 is a CD, displays the second initial image for DVDs when the optical disc 2 is a DVD, and displays the second initial image for BDs when the optical disc 2 is a BD.

Accordingly, after the start of the display of the first initial image, if the preparation operation for reproduction has been completed before a lapse of ten seconds, an image based on image data read from the optical disc 2 is displayed on the display 31 in place of the first initial image. If ten seconds has elapsed before the preparation operation for reproduction is completed, the second initial image is displayed on the display 31 in place of the first initial image.

Subsequently, if the preparation operation for reproduction has been completed while the second initial image is displayed (YES at S9), the controller 17 reproduces images from the optical disc 2 (S 14).

On the other hand, if the preparation operation for reproduction is not completed while the second initial image is displayed (NO at S9), the controller 17 obtains the current time from the timer 12, and measures the time elapsed from the start of the display of the second initial image based on the current time and the time stored in the memory 13 at the above step S3 (S10). If the measured time (time elapsed from the start of the display of the second initial image) is less than ten seconds (NO at S11), the controller 17 repeats the process from the above step S9. If the measured time is ten seconds or more (YES at S11), the controller 17 displays the third initial image on the display 31 (S12). As the third initial image, the controller 17 displays different images depending on the type of the optical disc 2 as described above. More particularly, the controller 17 displays the third initial image for CDs when the optical disc 2 is a CD, displays the third initial image for DVDs when the optical disc 2 is a DVD, and displays the third initial image for BDs when the optical disc 2 is a BD.

Accordingly, after the start of the display of the second initial image, if the preparation operation for reproduction has been completed before a lapse of ten seconds, an image based on image data read from the optical disc 2 is displayed on the display 31 in place of the second initial image. If ten seconds has elapsed before the preparation operation for reproduction is completed, the third initial image is displayed on the display 31 in place of the second initial image.

Subsequently, if the preparation operation for reproduction has been completed while the third initial image is displayed (YES at S 13), the controller 17 reproduces images from the optical disc 2 (S14).

Accordingly, after the start of the display of the third initial image, when the preparation operation for reproduction has been completed, an image based on image data read from the optical disc 2 is displayed on the display 31 in place of the third initial image. Until the preparation operation for reproduction is completed, the third initial image continues to be displayed.

As described above, in the disc data reproduction operation (i.e., when the optical disc apparatus 1 reproduces images and audio from the optical disc 2), the first, second, and third images different in type are sequentially displayed, as the initial images, as time passes during the preparation operation for reproduction.

According to the optical disc apparatus 1 configured as described above, when images and audio are reproduced from the optical disc 2, different types of images as initial images are sequentially displayed as time passes while the preparation operation for reproduction of images from the optical disc 2 is performed. Thereby, a user can be entertained by the initial images (different types of images displayed sequentially) during the waiting time before reproduction of images from the optical disc 2. Further, the sequential display of different types of images can inform a user that the preparation operation for reproduction is proceeding well. This can prevent the user from mistakenly thinking that some operation is required, thus preventing the user from operating the apparatus incorrectly.

Further, depending on the type of the optical disc 2 to be played, different images are displayed as the initial images. Thereby, a user can further enjoy during the waiting time before reproduction of images from the optical disc 2.

Further, an image that a user has selected is displayed as an initial image. Thereby, a user can cause a desired initial image to be displayed and thus can further enjoy during the waiting time before reproduction of images from the optical disc 2.

Further, an image indicating the type of the optical disc 2 is displayed as an initial image. Thereby, a user can look at the initial image (image indicating the type of the optical disc 2) to know the type of the optical disc 2 to be played. Then, based on the type of the optical disc 2 indicated by the initial image, the user can predict how long the user has to wait before images are reproduced. This can reduce the stress of waiting for images to be reproduced from the optical disc 2.

An image showing the name of the manufacturer of the optical disc apparatus 1 is also displayed as an initial image. Thereby, a user can know the name of the manufacturer of the optical disc apparatus 1 by viewing the initial image (image showing the name of the manufacturer of the optical disc apparatus 1). This can provide an advertisement to a user.

The present invention has been described above using a presently preferred embodiment, but those skilled in the art will appreciate that various modifications are possible. For example, an image that a user has selected, as the image to be displayed as an initial image, from among a number of images prepared in advance may be displayed as the first or third initial image. Likewise, an image indicating the type of the optical disc or an image showing the name of the manufacturer of the optical disc apparatus may be displayed as the second or third initial image. Further, images displayed as the initial images (first, second, and third initial images) may be automatically changed each time the optical disc apparatus reproduces images from an optical disc.

The optical disc apparatus may be one used only for one type of optical discs, i.e., any one of CDs, DVDs, and BDs. Further, the optical disc apparatus may be one having a display and a loudspeaker in one unit. Alternatively, the optical disc apparatus may be applied to an apparatus that reproduces images by projecting the images on a screen.

This application is based on Japanese patent application 2008-311452 filed December 5, 2008, the contents of which are hereby incorporated by reference.

## Claims

1. An optical disc apparatus that reproduces images from an optical disc by reading image data from the optical disc and displaying images based on the image data read from the optical disc, comprising:
initial image display means for, when the apparatus reproduces images from an optical disc, displaying given initial images while the apparatus is performing a preparation operation for reproduction of images from the optical disc,
wherein the initial image display means sequentially displays different types of images, as the initial images, as time passes.

2. The optical disc apparatus according to claim 1,
wherein the initial image display means displays different images, as the initial images, depending on type of the optical disc.

3. The optical disc apparatus according to claim 2,
wherein, as the initial images, the initial image display means displays images that a user has selected as images to be displayed as the initial images from among plural images prepared in advance.

4. The optical disc apparatus according to claim 3,
wherein the initial image display means displays an image indicating the type of the optical disc as a first initial image that is displayed first of the initial images.

5. The optical disc apparatus according to claim 4,
wherein the initial image display means displays an image showing name of manufacturer of the apparatus as a first initial image that is displayed first of the initial images.

6. The optical disc apparatus according to claim 3,
wherein the initial image display means displays an image showing name of manufacturer of the apparatus as a first initial image that is displayed first of the initial images.

7. The optical disc apparatus according to claim 2,
wherein the initial image display means displays an image indicating the type of the optical disc as a first initial image that is displayed first of the initial images.

8. The optical disc apparatus according to claim 1,
wherein the initial image display means displays an image showing name of manufacturer of the apparatus as a first initial image that is displayed first of the initial images.

9. The optical disc apparatus according to claim 1,
wherein the initial image display means displays an image indicating the type of the optical disc as a first initial image that is displayed first of the initial images.

10. The optical disc apparatus according to claim 1,
wherein, as the initial images, the initial image display means displays images that a user has selected as images to be displayed as the initial images from among plural images prepared in advance.
